# EUROPEAN PATENT SPECIFICATION

(11) **EP 2 687 367 B1**
(45) Date of publication and mention of the grant of the patent: **24.04.2019**
(21) Application number: 13176076.1
(22) Date of filing: 11.07.2013
(51) Int. Cl.: B32B 11/04, D06N 5/00, E04D 5/10, B32B 11/10, E04D 5/02, E04D 12/00

(54) **Bituminous underlay structure for non-continuous coverings**
Bituminöse Unterlagenstruktur für nicht durchgehende Abdeckungen
Structure sous-jacente bitumineuse pour revêtements non continus

(30) Priority: 17.07.2012 IT TV20120025 U
(43) Date of publication of application: 22.01.2014
(73) Proprietor: Silcart S.p.A., 31030 Carbonera, Frazione Mignagola TV (IT)
(72) Inventor: Faotto, Ugo, 31100 TREVISO (IT)
(74) Representative: Modiano, Micaela Nadia

(56) References cited:
- DE-A1- 2 735 823
- JP-A- H1 121 770
- US-A- 4 055 453
- US-A- 4 091 135
- US-A- 4 420 524
- US-A1- 2004 172 908
- US-A1- 2010 119 784

## Description

The present application relates to a bituminous underlay structure for non-continuous coverings.

Nowadays the production of bituminous underlay (for non-continuous coverings) focuses on the production of products with a relatively low basis weight, lower than 300-500 g/m², which involves the use of polyester (PET) or other membranes with a low basis weight (30-90) g/m².

The characteristic of membranes with a low basis weight, in particular 30-90 g/m², is the presence of non-uniformities and irregularities with a high incidence of thinning, i.e. regions with a lower basis weight and thickness, which is due to the technology for producing non-woven fabric.

This implies a low waterproofing of the end product at the points where the PET is thinner because a single layer of bituminous mixture cannot entirely cover the thinner points.

The main aim of the present invention is therefore to resolve the above-mentioned technical problems, eliminating the drawbacks in the cited known art and hence providing an invention that makes it possible to obtain a bituminous underlay which has a uniform surface despite using a membrane that is intrinsically light and non-uniform.

Within this aim, an object of the present invention is to provide a bituminous underlay that gives uniformity, elasticity and protection to the membrane and is waterproof.

Another object of the invention is to provide a bituminous underlay in which the membrane can be protected against damage by external agents, such as for example the stresses caused by the trampling of installation technicians during laying, in particular in roofs with a steep pitch in which the friction between the sheet and the special footwear used by installation technicians for walking on roofs can generate abrasions and surface cuts.

Another object of the invention is to provide a bituminous underlay that offers stability at and resistance to high temperatures, and high resistance to atmospheric ageing and to UV rays.

Another object of the invention is to provide an invention that is low-cost.

This aim and these and other objects which will become more apparent hereinafter are achieved by a bituminous underlay structure for non-continuous coverings, characterized in that it has an overall basis weight of 500-1500 g/m² and is constituted by a membrane with a basis weight of 30-100 g/m², made of polyester or fiberglass or polypropylene or synthetic, natural or composite fabrics or non-woven fabrics, embedded between two first layers which are obtained by saturation/covering with elastomeric bituminous mixture with a high content of SBS or other elastomers or polymers of synthetic or natural origin, virgin or recycled, the whole in turn embedded between at least two second layers which are obtained by spreading/covering with elastoplastomeric bituminous mixture with polymers of synthetic or natural origin, virgin or recycled, the whole in turn covered by two third layers of finishing with non-woven fabric or talc, sand or polyethylene film.

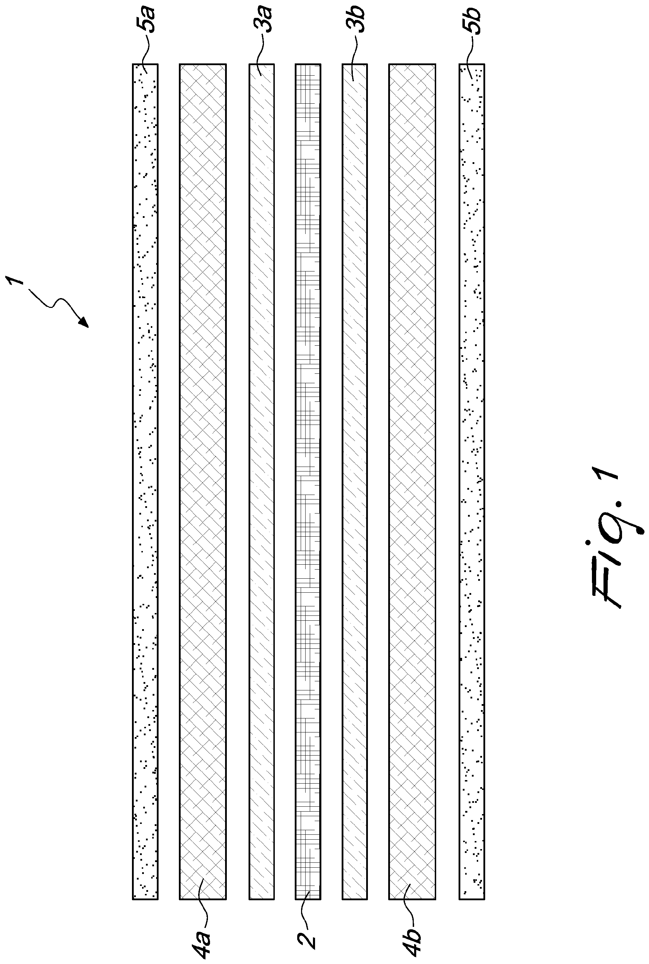

Further characteristics and advantages of the invention will become more apparent from the detailed description of a particular embodiment, illustrated by way of non-limiting example in the accompanying drawing wherein the sole Figure illustrates a schematic view of the structure of the invention.

With reference to the figure, the reference numeral 1 generally designates a bituminous underlay structure for non-continuous coverings which is constituted by a membrane 2, made of polyester or fiberglass or polypropylene or synthetic, natural or composite fabrics or non-woven fabrics.

Such structure has an overall basis weight of 500-1500 g/m².

Advantageously such membrane has a basis weight of 50-100 g/m².

The membrane is embedded between two first layers (3a, 3b) which are obtained by saturation/covering (where the covering can be obtained with different techniques such as spreading, extrusion, immersion, spraying) with elastomeric bituminous mixture with a high content of SBS (styrene butadiene styrene) or other elastomers or polymers of synthetic or natural origin, virgin or recycled.

Such first layers level the surface of the membrane and make it homogeneous.

The first high-performance elastomeric bituminous layers (3a, 3b) are constituted by a bituminous elastomeric and/or adhesive compound, made with polymers of natural or synthetic origin, virgin or recycled, with the following composition:
distilled bitumen (penetration 100-400 dmm): 40-80%
naphthenic or paraffinic oil: 1-6%
SBS: 10-30%
PE (polyethylene) or LDPE (low density polyethylene) and/or HDPE (high density polyethylene): 2-5%
Tatackifying resins (aromatic, colophonic, solid and/or liquid): 2-10%
CaCO3: 5-15%.

Alternatively, such first high-performance elastomeric bituminous layers (3a, 3b) are constituted by a bituminous elastomeric and/or adhesive compound, made with polymers of natural or synthetic origin, virgin or recycled, with the following composition:
distilled bitumen: 68%
oil: 5%
SBS: 15%
LDPE: 1%
HDPE: 1%
resins: 5%
CaCO3: 5%

Alternatively, such first high-performance elastomeric bituminous layers (3a, 3b) are constituted by a bituminous elastomeric and/or adhesive compound, made with polymers of natural or synthetic origin, virgin or recycled, with the following composition:
distilled bitumen: 67%
oil: 3%
SBS: 10%
LDPE: 4%
HDPE: 1%
resins: 5%
CaCO3: 10%

Alternatively, such first high-performance elastomeric bituminous layers (3a, 3b) are constituted by a bituminous elastomeric and/or adhesive compound, made with polymers of natural or synthetic origin, virgin or recycled, with the following composition:
distilled bitumen: 69%
oil: 4%
SBS: 13%
LDPE: 3%
HDPE: 1%
resins: 3%
CaCO3: 10%

Alternatively, such first high-performance elastomeric bituminous layers (3a, 3b) are constituted by a bituminous elastomeric and/or adhesive compound, made with polymers of natural or synthetic origin, virgin or recycled, with the following composition:
distilled bitumen: 56%
oil: 5%
SBS: 15%
LDPE: 3%
HDPE: 1%
resins: 5%
CaCO3: 15%

Such first high-performance elastomeric bituminous layers (3a, 3b) have a ball & ring index (index of resistance to high temperatures of the bituminous mixture - ASTM D36-95 standard) of 80-130 °C and a penetration (index of plasticity and ductility of the bituminous compound - ASTM D5-05A standard) of 20-90 dmm.

These characteristics make it possible to create a surface film that is very thin, attractive, protective, and resistant to low temperatures (-40 °C).

The whole is in turn embedded between at least two second layers (4a, 4b) which are obtained by spreading/covering with elastoplastomeric bituminous mixture with polymers of synthetic or natural origin, virgin or recycled.

Such second layers are constituted by an elastoplastomeric bituminous compound, made with polymers of natural or synthetic origin, virgin or recycled, with the following composition:
distilled bitumen (penetration 60-300 dmm): 40-80%
SBS: 2-10%
PE (LDPE and/or HDPE): 1-5%
IPP (xxx): 2-4%
APP: 3-10%
CaCO3: 20-70%

Alternatively, such second layers are constituted by an elastoplastomeric bituminous compound, made with polymers of natural or synthetic origin, virgin or recycled, with the following composition:
distilled bitumen: 58%
SBS: 3.5%
LDPE: 1%
IPP: 2%
APP: 2.5%
CaCO3: 33%

Alternatively, such second layers are constituted by an elastoplastomeric bituminous compound, made with polymers of natural or synthetic origin, virgin or recycled, with the following composition:
distilled bitumen: 55%
SBS: 3.5%
HDPE: 1%
APP: 1%
IPP: 2.5%
CaCO3: 37%

Alternatively, such second layers are constituted by an elastoplastomeric bituminous compound, made with polymers of natural or synthetic origin, virgin or recycled, with the following composition:
distilled bitumen: 66.5%
SBS: 3.5%
LDPE: 1%
APP: 0.5%
IPP: 3.5%
CaCO3: 25%

Alternatively, such second layers are constituted by an elastoplastomeric bituminous compound, made with polymers of natural or synthetic origin, virgin or recycled, with the following composition:
distilled bitumen: 60.5%
SBS: 4%
HDPE: 0.5%
APP: 3.5%
IPP: 1.5%
CaCO3: 30%

Such second high-performance elastoplastomeric bituminous layers (4a, 4b) have a ball & ring index (index of resistance to high temperatures of the bituminous mixture - ASTM D36-95 standard) of 95-130 °C and a penetration (index of plasticity and ductility of the bituminous compound - ASTM D5-05A standard) of 20-55 dmm.

The performance features of this bituminous mass are high stability at and resistance to high temperatures, and high resistance to atmospheric ageing and to UV rays and to external stresses caused by the trampling of installation technicians.

The whole is in turn covered by two third layers (5a, 5b) of finishing with non-woven fabric or talc, sand or polyethylene film.

Thus it has been found that the invention fully achieves the intended aim and objects, in that a bituminous underlay structure for non-continuous coverings is obtained which has a uniform surface, despite using a membrane made of non-woven fabric that is intrinsically light and non-uniform, is elastic, protects the membrane and is waterproof, with the result that the membrane can be protected against damage from external agents.

Also achieved are high stability at and resistance to high temperatures and high resistance to atmospheric ageing and to UV rays.

In fact the spreading, or extrusion, or presaturation with a first high-performance bituminous elastomeric layer of the membrane converts it to a uniform membrane to be subjected to subsequent bituminization with an elastoplastomeric mixture.

In practice at least two layers are created with two bituminous masses with different levels of performance: the first confers uniformity, elasticity and protection on the membrane (non-woven fabric), while the second gives waterproofing and structure to the end product.

Lastly, with the invention, if the surface layer is damaged then the impermeability of the sheet is ensured by the underlying layers.

Naturally the materials used as well as the dimensions of the individual components of the invention may be more pertinent to specific requirements. The various means of achieving certain different functions certainly need not coexist only in the embodiment shown, but may be present in many embodiments, even if they are not shown.

The characteristics indicated above as advantageous, convenient or the like, may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bituminous underlay structure (1) for non-continuous coverings, **characterized in that** it has an overall basis weight of 500-1500 g/m² and is constituted by a membrane (2) with a basis weight of 30-100 g/m², made of polyester or fiberglass or polypropylene or synthetic, natural or composite fabrics or non-woven fabrics, embedded between two first layers (3a, 3b) which are obtained by saturation/covering with elastomeric bituminous mixture with a high content of SBS or other elastomers or polymers of synthetic or natural origin, virgin or recycled, the whole in turn embedded between at least two second layers (4a, 4b) which are obtained by spreading/covering with elastoplastomeric bituminous mixture with polymers of synthetic or natural origin, virgin or recycled, the whole in turn covered by two third layers (5a, 5b) of finishing with non-woven fabric or talc, sand or polyethylene film.

2. The structure according to claim 1, **characterized in that** said first high-performance bituminous elastomeric layer (3a, 3b) is constituted by a bituminous elastomeric and/or adhesive compound, made with polymers of natural or synthetic origin, virgin or recycled, with the following composition:
distilled bitumen (penetration 100-400 dmm - ASTM D5-05A standard): 40-80%
naphthenic or paraffinic oil: 1-6%
SBS: 10-30%
PE or LDPE and/or HDPE: 2-5%
tackifying resins (aromatic, colophonic, solid and/or liquid): 2-10%
CaCO3: 5-15%.

3. The structure according to claim 1, **characterized in that** said first high-performance bituminous elastomeric layer (3a, 3b) is constituted by a bituminous elastomeric and/or adhesive compound, made with polymers of natural or synthetic origin, virgin or recycled, with the following composition:
distilled bitumen: 68%
oil: 5%
SBS: 15%
LDPE: 1%
HDPE: 1%
resins: 5%
CaCO3: 5%

4. The structure according to claim 1, **characterized in that** said first high-performance bituminous elastomeric layer (3a, 3b) is constituted by a bituminous elastomeric and/or adhesive compound, made with polymers of natural or synthetic origin, virgin or recycled, with the following composition:
distilled bitumen: 67%
oil: 3%
SBS: 10%
LDPE: 4%
HDPE: 1%
resins: 5%
CaCO3: 10%

5. The structure according to claim 1, **characterized in that** said first high-performance bituminous elastomeric layer (3a, 3b) is constituted by a bituminous elastomeric and/or adhesive compound, made with polymers of natural or synthetic origin, virgin or recycled, with the following composition:
distilled bitumen: 56%
oil: 5%
SBS: 15%
LDPE: 3%
HDPE: 1%
resins: 5%
CaCO3: 15%

6. The structure according to one or more of the preceding claims, **characterized in that** said first bituminous elastomeric layer (3a, 3b) has a ball & ring index (ASTM D36-95 standard) of 80-130 °C and a penetration of 20-90 dmm (ASTM D5-05A standard).

7. The structure according to one or more of the preceding claims, **characterized in that** at least one of said at least two second layers (4a, 4b) is constituted by an elastoplastomeric bituminous compound made with polymers of natural or synthetic origin, virgin or recycled, with the following composition:
distilled bitumen (penetration 60-300 dmm - ASTM D5-05A standard): 40-80%
SBS: 2-10%
PE or LDPE and/or HDPE: 1-5%
IPP: 2-4%
APP: 3-10%
CaCO3: 20-70%

8. The structure according to claim 7, **characterized in that** at least one of said at least two second layers (4a, 4b) is constituted by an elastoplastomeric bituminous compound made with polymers of natural or synthetic origin, virgin or recycled, with the following composition:
distilled bitumen: 58%
SBS: 3.5%
LDPE: 1%
IPP: 2%
APP: 2.5%
CaCO3: 33%

9. The structure according to any of the claims 1-6, **characterized in that** at least one of said at least two second layers (4a, 4b) is constituted by an elastoplastomeric bituminous compound made with polymers of natural or synthetic origin, virgin or recycled, with the following composition:
distilled bitumen: 66.5%
SBS: 3.5%
LDPE: 1%
APP: 0.5%
IPP: 3.5%
CaCO3: 25%

10. The structure according any of the claims 1-6, **characterized in that** at least one of said at least two second layers (4a, 4b) is constituted by an elastoplastomeric bituminous compound made with polymers of natural or synthetic origin, virgin or recycled, with the following composition:
distilled bitumen: 60.5%
SBS: 4%
HDPE: 0.5%
APP: 3.5%
IPP: 1.5%
CaCO3: 30%

## Patentansprüche

1. Eine bituminöse Unterlagenstruktur (1) für nicht durchgehende Abdeckungen, **dadurch gekennzeichnet, dass** sie eine Gesamt-Flächenmasse von 500-1500 g/m² hat und aus einer Membran (2) mit einer Flächenmasse von 30-100 g/m² besteht, hergestellt aus Polyester oder Glasfaser oder Polypropylen oder synthetischem, natürlichem oder Verbundgewebe odervliesstoff, eingebettet zwischen zwei ersten Schichten (3a, 3b), die gewonnen werden durch Imprägnierung/Abdeckung mit bituminöser Elastomermischung mit einem hohen Gehalt an SBS oder anderen Elastomeren oder Polymeren synthetischen oder natürlichen Ursprungs, unbehandelt oder recycelt, wobei das Ganze wiederum zwischen mindestens zwei zweiten Schichten (4a, 4b) eingebettet ist, die gewonnen werden durch Bestreichen/Abdecken mit bituminöser Elastoplastomermischung mit Polymeren synthetischen oder natürlichen Ursprungs, unbehandelt oder recycelt, wobei das Ganze wiederum mit zwei dritten Schichten (5a, 5b) zur Oberflächenbehandlung mit Vliesstoff oder Talk, Sand oder Polyethylenfolie bedeckt ist.

2. Die Struktur gemäß Anspruch 1, **dadurch gekennzeichnet, dass** die erste bituminöse Hochleistungs-Elastomerschicht (3a, 3b) aus einer bituminösen elastomeren und/oder klebenden Verbindung, hergestellt mit Polymeren natürlichen oder synthetischen Ursprungs, unbehandelt oder recycelt, mit folgender Zusammensetzung besteht:
destilliertes Bitumen (Durchdringung 100-400 dmm - ASTM D5-05A-Standard): 40-80%
naphthenisches oder paraffinisches Öl: 1-6%
SBS: 10-30%
PE oder LDPE und/oder HDPE: 2-5%
klebrig machende Harze (aromatisch, kolophonisch, fest und/oder flüssig): 2-10%
CaCO3: 5-15%.

3. Die Struktur gemäß Anspruch 1, **dadurch gekennzeichnet, dass** die erste bituminöse Hochleistungs-Elastomerschicht (3a, 3b) aus einer bituminösen elastomeren und/oder klebenden Verbindung, hergestellt mit Polymeren natürlichen oder synthetischen Ursprungs, unbehandelt oder recycelt, mit folgender Zusammensetzung besteht:
| | |
|---|---|
| destilliertes Bitumen: | 68% |
| Öl: | 5% |
| SBS: | 15% |
| LDPE: | 1% |
| HDPE: | 1% |
| Harze: | 5% |
| CaCO3: | 5% |

4. Die Struktur gemäß Anspruch 1, **dadurch gekennzeichnet, dass** die erste bituminöse Hochleistungs-Elastomerschicht (3a, 3b) aus einer bituminösen elastomeren und/oder klebenden Verbindung, hergestellt mit Polymeren natürlichen oder synthetischen Ursprungs, unbehandelt oder recycelt, mit folgender Zusammensetzung besteht:
| | |
|---|---|
| destilliertes Bitumen: | 67% |
| Öl: | 3% |
| SBS: | 10% |
| LDPE: | 4% |
| HDPE: | 1% |
| Harze: | 5% |
| CaCO3: | 10% |

5. Die Struktur gemäß Anspruch 1, **dadurch gekennzeichnet, dass** die erste bituminöse Hochleistungs-Elastomerschicht (3a, 3b) aus einer bituminösen elastomeren und/oder klebenden Verbindung, hergestellt mit Polymeren natürlichen oder synthetischen Ursprungs, unbehandelt oder recycelt, mit folgender Zusammensetzung besteht:
| | |
|---|---|
| destilliertes Bitumen: | 56% |
| Öl: | 5% |
| SBS: | 15% |
| LDPE: | 3% |
| HDPE: | 1% |
| Harze: | 5% |
| CaCO3: | 15% |

6. Die Struktur gemäß einem oder mehreren der obigen Ansprüche, **dadurch gekennzeichnet, dass** die erste bituminöse Elastomerschicht (3a, 3b) einen Kugelringindex (ASTM D36-95-Standard) von 80-130°C und eine Durchdringung von 20-90 dmm (ASTM D5-05A-Standard) hat.

7. Die Struktur gemäß einem oder mehreren der obigen Ansprüche, **dadurch gekennzeichnet, dass** mindestens eine der mindestens zwei zweiten Schichten (4a, 4b) aus einer bituminösen Elastoplastomerverbindung besteht, hergestellt mit Polymeren natürlichen oder synthetischen Ursprungs, unbehandelt oder recycelt, mit folgender Zusammensetzung:
destilliertes Bitumen (Durchdringung 60-300 dmm - ASTM D5-05A-Standard): 40-80%
SBS: 2-10%
PE oder LDPE und/oder HDPE: 1-5%
IPP: 2-4%
APP: 3-10%
CaCO3: 20-70%

8. Die Struktur gemäß Anspruch 7, **dadurch gekennzeichnet, dass** mindestens eine der mindestens zwei zweiten Schichten (4a, 4b) aus einer bituminösen Elastoplastomerverbindung besteht, hergestellt mit Polymeren natürlichen oder synthetischen Ursprungs, unbehandelt oder recycelt, mit folgender Zusammensetzung:
destilliertes Bitumen: 58%
SBS: 3,5%
LDPE: 1%
IPP: 2%
APP: 2,5%
CaCO3: 33%

9. Die Struktur gemäß einem beliebigen der Ansprüche 1-6, **dadurch gekennzeichnet, dass** mindestens eine der mindestens zwei zweiten Schichten (4a, 4b) aus einer bituminösen Elastoplastomerverbindung besteht, hergestellt mit Polymeren natürlichen oder synthetischen Ursprungs, unbehandelt oder recycelt, mit folgender Zusammensetzung:
destilliertes Bitumen: 66,5%
SBS: 3,5%
LDPE: 1%
APP: 0,5%
IPP: 3,5%
CaCO3: 25%

10. Die Struktur gemäß einem beliebigen der Ansprüche 1-6, **dadurch gekennzeichnet, dass** mindestens eine der mindestens zwei zweiten Schichten (4a, 4b) aus einer bituminösen Elastoplastomerverbindung besteht, hergestellt mit Polymeren natürlichen oder synthetischen Ursprungs, unbehandelt oder recycelt, mit folgender Zusammensetzung:
destilliertes Bitumen: 60,5%
SBS: 4%
HDPE: 0,5%
APP: 3,5%
IPP: 1,5%
CaCO3: 30%

## Revendications

1. Structure sous-jacente bitumineuse (1) pour des revêtements non continus, **caractérisée en ce qu'**elle a un grammage total de 500 à 1 500 g/m² et est constituée d'une membrane (2) avec un grammage de 30 à 100 g/m², constituée de polyester ou de fibre de verre ou de polypropylène ou de tissus synthétiques, naturels ou composites ou de tissus non-tissés, incorporée entre deux premières couches (3a, 3b) qui sont obtenues par saturation/recouvrement avec un mélange bitumineux élastomère ayant une haute teneur en SBS ou autres élastomères ou polymères d'origine synthétique ou naturelle, vierges ou recyclés, l'ensemble étant à son tour incorporé entre au moins deux deuxièmes couches (4a, 4b) qui sont obtenues par étalement/recouvrement avec un mélange bitumineux élastoplastomère avec des polymères d'origine synthétique ou naturelle, vierges ou recyclés, l'ensemble étant à son tour recouvert de deux troisièmes couches (5a, 5b) de finition avec un tissu non-tissé ou du talc, du sable ou un film de polyéthylène.

2. Structure selon la revendication 1, **caractérisée en ce que** ladite première couche élastomère bitumineuse à haute performance (3a, 3b) est constituée d'un composé bitumineux élastomère et/ou adhésif, fabriqué avec des polymères d'origine naturelle ou synthétique, vierges ou recyclés, ayant la composition suivante :
bitume distillé (pénétration : 100 à 400 dmm - norme ASTM D5-05A) : 40 à 80 %,
huile naphténique ou paraffinique : 1 à 6 %,
SBS : 10 à 30 %,
PE ou LPDE et/ou HDPE : 2 à 5 %,
résines poisseuses (aromatiques, colophoniques, solides et/ou liquides) : 2 à 10 %,
CaCO₃ : 5 à 15 %.

3. **Structure** selon la revendication 1, **caractérisée en ce que** ladite première couche élastomère bitumineuse à haute performance (3a, 3b) est constituée d'un composé bitumineux élastomère et/ou adhésif, fabriqué avec des polymères d'origine naturelle ou synthétique, vierges ou recyclés, ayant la composition suivante :
bitume distillé : 68 %,
huile: 5 %,
SBS : 15 %,
LPDE : 1 %,
HDPE : 1 %,
résines : 5 %,
CaCO₃ : 5 %.

4. Structure selon la revendication 1, **caractérisée en ce que** ladite première couche élastomère bitumineuse à haute performance (3a, 3b) est constituée d'un composé bitumineux élastomère et/ou adhésif, fabriqué avec des polymères d'origine naturelle ou synthétique, vierges ou recyclés, ayant la composition suivante :
bitume distillé : 67 %,
huile : 3 %,
SBS : 10 %,
LPDE : 4 %,
HDPE : 1 %,
résines : 5 %,
CaCO₃ : 10 %.

5. Structure selon la revendication 1, **caractérisée en ce que** ladite première couche élastomère bitumineuse à haute performance (3a, 3b) est constituée d'un composé bitumineux élastomère et/ou adhésif, fabriqué avec des polymères d'origine naturelle ou synthétique, vierges ou recyclés, ayant la composition suivante :
bitume distillé : 56 %,
huile : 5 %,
SBS : 15 %,
LPDE : 3 %,
HDPE : 1 %,
résines : 5 %,
CaCO₃ : 15 %.

6. Structure selon une ou plusieurs des revendications précédentes, **caractérisée en ce que** ladite première couche élastomère bitumineuse (3a, 3b) a un indice de bille et anneau (norme ASTM D36-95) de 80 à 130 °C et une pénétration de 20 à 90 dmm (norme ASTM D5-05A).

7. Structure selon une ou plusieurs des revendications précédentes, **caractérisée en ce qu'**au moins une desdites au moins deux deuxièmes couches (4a, 4b) est constituée d'un composé bitumineux élastoplastomère fabriqué avec des polymères d'origine naturelle ou synthétique, vierges ou recyclés, ayant la composition suivante :
bitume distillé (pénétration : 60 à 300 dmm - norme ASTM D5-05A) : 40 à 80 %,
SBS : 2 à 10 %,
PE ou LPDE et/ou HDPE : 1 à 5 %,
IPP : 2 à 4 %,
APP : 3 à 10 %,
CaCO₃ : 20 à 70 %.

8. Structure selon la revendication 7, **caractérisée en ce qu'**au moins une desdites au moins deux deuxièmes couches (4a, 4b) est constituée d'un composé bitumineux élastoplastomère fabriqué avec des polymères d'origine naturelle ou synthétique, vierges ou recyclés, ayant la composition suivante :
bitume distillé : 58 %,
SBS : 3,5 %,
LPDE : 1 %,
IPP : 2 %,
APP : 2,5 %,
CaCO₃ : 33 %.

9. Structure selon l'une quelconque des revendications 1 à 6, **caractérisée en ce qu'**au moins une desdites au moins deux deuxièmes couches (4a, 4b) est constituée d'un composé bitumineux élastoplastomère fabriqué avec des polymères d'origine naturelle ou synthétique, vierges ou recyclés, ayant la composition suivante :
bitume distillé : 66,5 %,
SBS : 3,5 %,
LPDE : 1 %,
APP : 0,5 %,
IPP : 3,5 %,
CaCO₃ : 25 %.

10. Structure selon l'une quelconque des revendications 1 à 6, **caractérisée en ce qu'**au moins une desdites au moins deux deuxièmes couches (4a, 4b) est constituée d'un composé bitumineux élastoplastomère fabriqué avec des polymères d'origine naturelle ou synthétique, vierges ou recyclés, ayant la composition suivante :
bitume distillé : 60,5 %,
SBS : 4 %,
HDPE : 0,5 %,
APP : 3,5 %,
IPP : 1,5 %,
CaCO₃ : 30 %.
